Europäisches Patentamt

European Patent Office

Office européen des brevets

(19)

(11) Veröffentlichungsnummer: **0 257 298**
**B1**

(12) **EUROPÄISCHE PATENTSCHRIFT**

(45) Veröffentlichungstag der Patentschrift: **16.01.91**

(21) Anmeldenummer: **87110522.7**

(22) Anmeldetag: **21.07.87**

(51) Int. Cl.⁵: **B 08 B 3/10,** B 08 B 9/08,
B 01 D 21/24

(54) Verfahren und Vorrichtung zur Reinigung von Flüssigkeitsbehältern.

(30) Priorität: **01.08.86 DE 3626182**

(43) Veröffentlichungstag der Anmeldung:
**02.03.88 Patentblatt 88/09**

(45) Bekanntmachung des Hinweises auf die
Patenterteilung:
**16.01.91 Patentblatt 91/03**

(84) Benannte Vertragsstaaten:
**AT BE CH ES FR GB GR IT LI LU NL SE**

(56) Entgegenhaltungen:
**DE-A-3 022 390**
**DE-A-3 244 539**
**DE-C- 893 595**
**US-A-2 351 163**
**US-A-4 492 113**

(73) Patentinhaber: **KSB Aktiengesellschaft
Johann-Klein-Strasse 9
D-6710 Frankenthal (DE)**

(72) Erfinder: **Pretzschel, Jochen
Poppenreuther Strasse 31
D-8500 Nürnberg 90 (DE)**

EP 0 257 298 B1

## Beschreibung

Die Erfindung betrifft ein Verfahren zur Reinigung eines Flüssigkeitsbehälters, welcher der Aufnahme einer mit Feststoffen belasteten Flüssigkeit dient, die im Flüssigkeitsbehälter eine freie Oberfläche bildet. Gegenstand der Erfindung sind auch verschiedene alternative Vorrichtungen zur Durchführung dieses Verfahrens.

Die Notwendigkeit der Reinigung von Flüssigkeitsbehältern, welche mit Feststoffen belastete Flüssigkeiten aufnehmen, ergibt sich aus dem Umstand, daß die Feststoffe, die bereits nach einer kurzen Verweildauer auf den Boden des Behälters absinken, nicht mit der normalen Auslaufströmung fortgespült werden. Um die früher übliche manuelle Reinigung des Behälterbodens zu vermeiden, wurden bereits die verschiedensten Verfahren und Vorrichtungen zur Reinigung von Flüssigkeitsbehältern, wie Abwasserbecken und Regenrückhaltebecken, vorgeschlagen. Diese Maßnahmen kamen vor, während oder nach der Flüssigkeitsentleerung zum Einsatz.

So wurde beispielsweise der auf dem Boden von Abwasserrückhaltebecken verbleibende Schlamm durch mechanische Räumeinrichtungen oder durch verfahrbare Sprühanlagen beseitigt. Um den für derartige Einrichtungen notwendigen Aufwand zu verringern, wurden auch bereits Verfahren vorgeschlagen, mit deren Hilfe eine Aufwirbelung der Schwebstoffe vor und während der Entleerung der Becken möglich wurde. Zur Durchführung dieser Verfahren wurden Umwälzaggregate, wie Propeller, Paddel oder Rührwerke (DE—C—30 22 390) oder nahe der Beckensohle angebrachte Strahlrohre (DE—C—32 44 539) benutzt.

Der Nachteil dieser Umwälzeinrichtungen ist darin zu sehen, daß die von ihnen erzeugte Strömung zu stetig und gleichförmig ist und daß die Intensität mit dem Abstand vom Strömungserzeuger stark abnimmt. Hierdurch können, vor allem bei größeren Becken, Feststoffablagerungen in einiger Entfernung vom Umwälzaggregat nicht befriedigend beseitigt werden. Ebenso treten an den Randzonen eines so erzeugten Flüssigkeitsstromes zunehmend höher werdende Ablagerungen auf. Diesem Problem konnte nur mit der Anordnung weiterer Umwälzeinrichtungen, also einem erhöhten Aufwand, begegnet werden.

Auf einem Gebiet, das sich von dem hier behandelten in wesentlichen Merkmalen unterscheidet, sind auch schon Verfahren zur Entfernung von Ablagerungen vorgeschlagen worden, die mit Hilfe von stoßförmig in ein Strömungsmedium eingeleiteten Impulsen arbeiten.

So ist aus der DE—C—893 595 ein Verfahren zum Lösen und Entfernen von Ablagerungen in Kanälen und Rohren bekannt, bei dem Impulse durch flüssige oder gasförmige Medien erzeugt werden, die unter erhöhtem Druck in das zu reinigende System eingespeist werden. Die entstehenden longitudinalen oder kreisförmigen Impulse sollen die Ablagerungen lockern und schließlich lösen. Durch die im System herrschende Strömung werden die abgelösten Teile dann fortgetragen. Mit stückigen Materialien, wie Sand, Schotter oder Kies, die dem Strömungsmedium beigegeben werden, soll gemäß einer Weiterbildung dieses Verfahrens der Ablösungsprozeß noch unterstützt werden.

Durch die US—A—2 351 163 ist ein Verfahren zur Reinigung der Wände eines gasführenden Systems bekannt, bei dem die in Form fester Partikel auftretenden Ablagerungen durch Vibrationen gelöst werden. Die Vibrationen können durch kurz aufeinander folgende Stöße ausgelöst werden, die in das im System befindliche Gas eingeleitet werden und die das vorhandene Gasvolumen in Schwingungen versetzen.

Die beiden vorstehend beschriebenen Verfahren sind nur für geschlossene, druckdichte Leitungssysteme geeignet. So dürfen auch die in der DE—C—893 595 zitierten Kanäle keine Flüssigkeitsbehälter mit freier Oberfläche sein, sondern sie müssen auf der gesamten Innenwand mit einem Strömungsmedium beaufschlagte Leitungen sein.

Ziel der Erfindung ist es, ein Verfahren und Vorrichtungen zu dessen Durchführung zu schaffen, welche bei einem geringen Aufwand an Aggregaten und an Energie die in einen Behälter eingetragenen Flüssigkeiten und Feststoffe so aufbereiten, daß die Feststoffe beim Entleeren des Behälters stetig und vollständig mit der Flüssigkeit ausgetragen werden.

Die gestellte Aufgabe wird erfindungsgemäß gelöst durch eine in die im Flüssigkeitsbehälter befindliche Flüssigkeit eingeleitete Stoßwellen-Strömung.

Gegenüber der Umwälzströmung, deren die Feststoffe aufwirbelnde Wirkung mit der Entfernung vom Umwälzaggregat stark abnimmt, besitzt das erfindungsgemäße Verfahren den Vorteil, daß durch die Stoßwellen-Strömung fortschreitende Wellenzüge mit Koppeleffekt und Reflektion erzeugt werden, deren intensiveReinigungswirkung auch auf einer längeren Strecke nur geringfügig abnimmt. Vor allem bei der Restentleerung von Becken wird erst durch die strömungsrichtende und damit flächendeckende Wirkung eine gezielte großflächige Reinigungsströmung durch sogenannte rollende Wellen ermöglicht, die zu einer gründlichen Aufwirbelung und Austragung der Feststoffe führt.

Die Stoßwellen-Strömung kann auf unterschiedliche Art erzeugt werden. Eine hier vorgeschlagene Vorrichtung zur Durchführung des erfindungsgemäßen Verfahrens wird gebildet durch ein in den zu reinigenden Flüssigkeitsbehälter hineinreichendes, von einer Flüssigkeit durchströmtes Rohrsystem, dessen Strömungsquerschnitt zur Erzeugung stoßartiger Strömung-s und Mengenänderungen veränderbar ist.

Bei Verwendung einer — aus der DE—C—32 44 539 bekannten Einrichtung mit einer aus dem zu reinigenden Behälter ansaugenden Kreiselpumpe, deren Förderstrom durch eine Strahldüse geführt wird, wobei in den so gebildeten Förderstrahl hoher Geschwindigkeit Luft über ein Belüftungsrohr eingesaugt wird, welche in einer Mischkammer mit dem Förderstrahl vermischt wird, ist es als vorteilhaft anzusehen, wenn zur Erzeugung der Stoßwellen-Strömung in dem auf der Druckseite der Kreiselpumpe gelegenen Rohrsystem eine gesteuerte Drosselklappe angeordnet ist.

Die Betätigung der Drosselklappe kann durch einen extern gesteuerten Antrieb mit kurzen Schließ und Öffnungszeiten erfolgen. Hierfür kann beispielsweise ein Hubmagnet oder ein Nockenwellenantrieb eingesetzt werden.

Es besteht auch die Möglichkeit, die Drosselklappe durch die in der Mischkammer und im Belüftungsrohr auftretende Druckdifferenz zu betätigen. Hierzu kann die Drosselklappe mit einem im Luftstrom der durch das Belüftungsrohr zugeführten Luft gelegenen Drosselkolben verbunden sein. Die Drosselklappe kann dabei direkt mit dem Drosselkolben verbunden bzw. einstükkig mit diesem ausgeführt sein.

Eine bevorzugte Ausführung der erfindungsgemäßen Vorrichtung zeichnet sich dadurch aus, daß die um eine Achse drehbare Drosselklappe am Ausgang der Strahldüse angeordnet und über einen Seilzug und eine sich am Drosselkolben abstützende Feder flexibel mit dem Drosselkolben verbunden ist, daß der gegenüber dem Belüftungsrohr und einer Luftblende verschiebbare Drosselkolben einen rundum verlaufenden Kolbenvorsprung und einen Kolbenrücksprung besitzt, welche die freie Querschnittsfläche zwischen der Luftblende und dem Drosselkolben über dessen Hub verändern und daß der Drosselkolben an einer mittels einer Spannvorrichtung verstellbaren Feder zentrisch aufgehängt ist.

Die vorstehend geschilderte Vorrichtung kann weiter ausgestaltet werden durch eine an der Oberfläche des Drosselkolbens angeordnete Korrekturöffnung, deren freier Öffnungsquerschnitt mittels eines verstellbaren Schiebers veränderbar ist. Im übrigen kann diese Vorrichtung derart gestaltet sein, daß der Drosselspalt zwischen der Luftblende und dem Drosselkolben innerhalb des Belüftungsrohres angeordnet ist und eine Druckfeder die Vorspannung des Drosselkolbens übernimmt. Die Druckdifferenz-Betätigungseinrichtung zur Steuerung der Drosselklappe kann dabei am äußeren Ende des Belüftungsrohres oder am Übergang der Mischkammer zum Belüftungsrohr angeordnet sein.

Die Drosselklappe selbst kann auf der der Betätigungseinrichtung zugewandten Seite oder auf der gegenüberliegenden Seite angeordnet sein. Sie kann sich dabei am Eingang der Strahldüse, in der Strahldüse oder an deren Ausgang befinden.

Schließlich wird noch vorgeschlagen daß die Drosselklappe durch die im flüssigkeitsdurchströmten Rohrsystem entstehende Druckdifferenz so gesteuert ist, daß stoßartige Mengenänderungen entstehen.

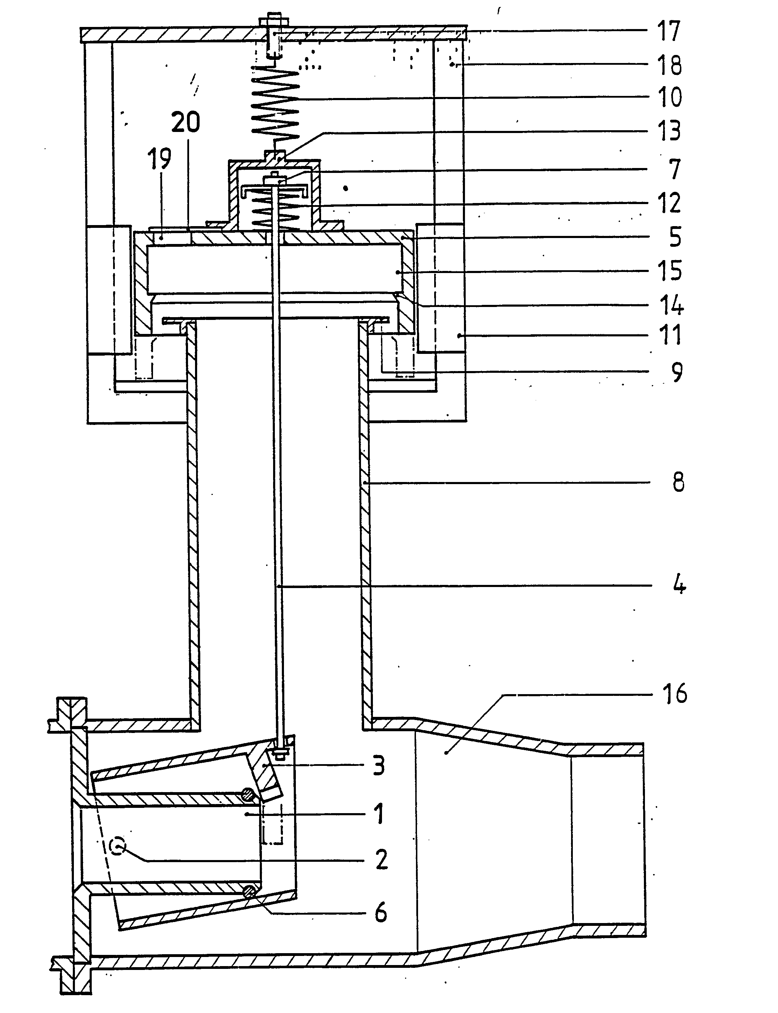

Anhand eines Ausführungsbeispiels wird die Erfindung näher erläutert. Die Zeichnung zeigt eine Teilansicht einer erfindungsgemäßen Vorrichtung in Schnittdarstellung.

Die Vorrichtung ist einer aus einem Beckenansaugenden Kreiselpumpe nachgeschaltet. Am Ausgang einer Strahldüse (1) ist eine um eine Achse (2) schwenkbare Drosselklappe (3) angeordnet, die über einen Seilzug (4) und eine Feder (12) flexibel mit einem Drosselkolben (5) verbunden ist. Die Seilzuganordnung mit einer Befestigung (7) ist dabei so gestaltet, daß eine Koppelung zwischen dem Drosselkolben (5) und der Drosselklappe (3) nur in der Zugrichtung des Seilzuges (4) gegeben ist.

Der in Führungsleisten (11) geführte Drosselkolben (5) wirkt zusammen mit einer den äußeren Austritt eines Belüftungsrohres (8) überdeckenden Luftblende (9); gegenüber dieser ist der Drosselkolben (5) gegen den Zug einer in ihrer Länge mittels einer Spannvorrichtung (17) veränderbaren Feder (10) verschieblich. Die Spannvorrichtung (17) ist an einem Tragrahmen (18) angeordnet. Den anderen Befestigungspunkt der Feder (10) bildet eine luftdicht auf dem Drosselkolben (5) angeordnete Verschlußkappe (13).

Der Hubbegrenzung der Drosselklappe (3) dient ein elastischer Profilring (6), der am äußeren Umfang der Strahldüse (1) angeordnet ist.

Der Drosselkolben (5) besitzt einen rundum verlaufenden Kolbenvorsprung (14) und einen Kolbenrücksprung (15), die bei Betätigung des Drosselkolbens (5) in eine Luftblende (9) nacheinander eintauchen und mit dieser einen veränderbaren Ringspalt bilden. An der Oberseite des Drosselkolbens (5) befindetsich eine Korrekturöffnung (19), über welcher ein in Anpassung an örtliche Gegebenheiten verstellbarer Schieber (20) angebracht ist. Durch eine von Hand vorzunehmende Verstellung des Schiebers (20) ist der freie Öffnungsquerschnitt der Korrekturöffnung (19), welche einen Bypass zu dem Ringspalt darstellt, veränderbar. Durch eine Vergrößerung des Öffnungsquerschnittes ergibt sich eine Verringerung der Hubgeschwindigkeit des Drosselkolbens (5).

Die über die Strahldüse (1) geförderte Flüssigkeit und die über das Belüftungsrohr (8) eintretende Luft werden in einer Mischkammer (16) miteinander vermischt.

Die Wirkungsweise der dargestellten Vorrichtung ist folgende:

Bei einem gefüllten Becken, d. h. einem hohen Füllstand über der in Nähe der Beckensohle installierten Vorrichtung, wird in der Strahldüse (1) eine hohe Flüssigkeitsströmung erzeugt. Beim Austritt des Flüssigkeitsstrahles in die Mischkammer (16) entsteht dabei in dieser und im Belüftungsrohr (8), welches über den maximalen Füllstand herausgeführt ist, ein Differenzdruck gegenüber der Umgebung. Bei großer Füllstandshöhe im Becken ergibt sich ein relativ geringer negativer Differenzdruck in der Mischkammer (16) und im Belüftungsrohr (8) gegenüber der Atmosphäre. Der in Ausgangsstellung hochgezogene Drosselkolben (5) bildet mit der Luftblende (9) einen Drosselspalt. Die im Drosselspalt erzeugte Druckdifferenz wird zur Steuerung der Drosselklappe genutzt. Sofern die Zugkraft der Feder (10) größer ist als die durch den Differenzdruck am Drosselkolben (5) erzeugte Gegenkraft, verbleibt der Drosselkolben (5) in seiner oberen Position. Die Drosselklappe (3) befindet sich ebenfalls in ihrer oberen Ausgangslage. Die Strahldüse (1) ist somit voll geöffnet; der ungehindert austretende Düsenstrahl vermag dabei einen hohen Differenzdruck zu erzeugen.

Bei der Beckenentleerung nimmt die Füllstandshöhe ab und damit sinkt der Füllstandsgegendruck, so daß sich der resultierende Differenzdruck am Drosselkolben (5) erhöht und die Zugkraft der Feder (10) überwindet. Sobald nun der Kolbenvorsprung (14) des sich abwärts bewegenden Drosselkolbens (5) in die Luftblende (9) eintaucht, verstärkt sich aufgrund des nun erheblich verengten Ringspaltes zwischen Drosselkolben (5) und Luftblende (9) die wirksame Druckdifferenz sprunghaft.

Hierdurch wird der Drosselkolben (5) bis in seine untere Endlage gezogen. Die nun zwischen dem Kolbenrücksprung (15) und der Luftblende (9) vergrößerte Spaltfläche wirkt zusammen mit der federnd aufgehängten Drosselklappe (3) als Umschalt-Punkt.

Die Drosselkolben-Veränderung wird nicht unmittelbar in eine Bewegung der Drosselklappe (3) umgesetzt. Die Feder (12) ermöglicht eine Verzögerung, so daß die Abwärtsbewegung des Drosselkolbens (5) nicht durch eine gleichzeitig von der Drosselklappe (3) bewirkte Strahl- und Differenzdruckänderung gestört wird. Darüber hinaus wirkt die im Belüftungsrohr (8) eingeschlossene Luftmasse verzögernd auf die Druckdifferenzänderung zwischen Mischkammer (16) und Drosselkolben (5).

Bei entlastetem Seilzug (4) greift die Drosselklappe (3) selbsttätig in die Strömung der Strahldüse (1) ein. Das geschieht zunächst durch das Eigengewicht der Drosselklappe (3) und nach etwa dem halbem Weg zusätzlich durch die entstehende Druckdifferenz an der Drosselklappe (3), so daß eine sehr kurze Verschlußzeit erreicht wird.

Die Verengung der Strahldüse (1) durch die Drosselklappe (3) hat bei dieser beschriebenen Ausführung einen geringeren Belüftungs-Differenzdruck zur Folge. Der Druckunterschied zwischen offener und teilgeschlossener Strahldüse (1) wird zur selbsttätigen Steuerung der Drosselklappe (3) genutzt.

Bei teilgeschlossener Strahldüse (1) und dabei reduzierter Druckdifferenz am Drosselkolben (5) überwiegt die Zugkraft der Feder (10). Diese zieht den Drosselkolben (5) wieder nach oben. Die Drosselklappe (3) wird auch beim Öffnungsvorgang mit einer gewissen Verzögerung durch das Nachgeben der Feder (12) geöffnet; damit ist das Überbrücken des engen Spaltes zwischen Kolbenvorsprung (14) und Luftblende (9) sichergestellt.

Durch das schnelle Öffnen der Drosselklappe (3) wird schlagartig ein großer Mengenstrom freigesetzt. Hieraus entsteht ein Druckstoß, der sich in die im Becken befindliche Flüssigkeit hinein fortpflanzt und zu einer Stoßwelle führt.

Aufgrund des geringen Füllstandsgegendrukkes ergibt sich nun wieder die weiter oben geschilderte Schließung der Drosselklappe (3). Hier wiederum schließt sich das schlagartige Öffnen der Drosselklappe (3) an. Da sich die Drosselklappen-Steuerung selbsttätig aufrechterhält, entsteht ein Stoßwellen-Koppeleffekt, der die Strömung auch beifast geleertem Becken weiträumig ausrichtet und damit bis zur Restentleerung eine großflächige Reinigungsströmung durch rollende Wellen aufrechterhält.

Die Aufwirbelung der Feststoffe und damit die Reinigungswirkung, die auf der Stoßwellen-Strömung beruhen, werden unterstützt durch einen weiteren Effekt, der sich beim Schließen der Drosselklappe (3) ergibt. Der bei verringertem Durchgang durch die Strahldüse (1) verengte Strahl erfährt durch die Steilheit der Pumpen-Förderkennlinie einen erhöhten Druck und damit eine größere Strahltiefe.

Wird bei der Restentleerung, z. B. eines engen Kanalraumes, zuletzt nur ein dünner Strahl gewünscht, so kann dies durch eine entsprechende Auslegung der Feder (10) erreicht werden. Deren Zugkraft muß dann so bemessen sein, daß sie bei sehr niedrigem Füllstand und damit sehr hohem Differenzdruck am Drosselkolben (5) auch bei maximal geschlossener Drosselklappe (3) den Drosselkolben (5) nicht mehr hochzuziehen vermag.

Statt einer Drosselklappe können auch zwei zur Strahldüse zentrisch angeordnete Halbschalen vorgesehen werden. Hieraus ergibt sich, daß nicht bei offener, sondern bei geschlossener Drosselklappe der höchste Belüftungs-Unterdruck vorliegt. Damit wird auch bei gefülltem Becken und somit höchstem Füllstandsgegendruck der erzielbare Belüftungs-Differenzdruck nochmals vergrößert. Bei einer wiederum frei beweglichen Drosselklappenbetätigung ist auch hier die Verstopfungsfreiheit gewährleistet.

Die Betätigung der Drosselklappe kann selbstverständlich auch durch andere Mittel, wie sie beispielsweise in den übrigen Ansprüchen genannt sind, bewirkt werden, so wie auch andere Mittel zur Erzeugung einer Stoßwellen-Strömung denkbar sind. Schließlich kann die gesamte Reinigungseinrichtung in einer quer zur Strahlrichtung verlaufenden Lagerung aufgehängt werden, so daß sie durch den Rückstoßunterschied zwischen den bei offener und geschlossener Drosselklappe abgegebenen Strahlen vertikale Bewegungen ausführt.

**Patentansprüch**

1. Verfahren zur Reinigung eines Flüssigkeitsbehälters, welcher der Aufnahme einer mit Feststoffen belasteten Flüssigkeit dient, die im Flüssigkeitsbehälter eine freie Oberfläche bildet, gekennzeichnet durch eine in die im Flüssigkeitsbehälter befindliche Flüssigkeit eingeleitete Stoßwellen-Strömung.

2. Vorrichtung zur Durchführung des Verfahrens nach Anspruch 1, gekennzeichnet durch ein in den zu reinigenden Flüssigkeitsbehälter hineinreichendes, von einer Flüssigkeit durchströmtes
Rohrsystem (1, 16), dessen Strömungsquerschnitt
zur Erzeugung stoßartiger Strömungs- und Mengenänderungen veränderbar ist.

3. Vorrichtung nach Anspruch 2, mit einer aus
dem zu reinigenden Behälter ansaugenden Kreiselpumpe, deren Förderstrom durch eine Strahldüse (1) geführt wird, wobei in den so gebildeten
Förderstrahl hoher Geschwindigkeit Luft über ein
Belüftungsrohr (8) eingesaugt wird, welche in
einer Mischkammer (16) mit dem Förderstrahl
vermischt wird, dadurch gekennzeichnet, daß in
dem auf der Druckseite der Kreiselpumpe gelegenen Rohrsystem (1, 16) eine gesteuerte Drosselklappe (3) angeordnet ist.

4. Vorrichtung nach den Ansprüchen 2 und 3,
dadurch gekennzeichnet, daß die Drosselklappe
(3) von einem extern gesteuerten Antrieb mit
kurzen Schließ- und Öffnungszeiten betätigt wird.

5. Vorrichtung nach den Ansprüchen 2 und 4,
dadurch gekennzeichnet, daß als Antrieb ein Hubmagnet dient.

6. Vorrichtung nach den Ansprüchen 2 bis 4,
dadurch gekennzeichnet, daß ein Nockenwellenantrieb Verwendung findet.

7. Vorrichtung nach den Ansprüchen 2 und 3,
dadurch gekennzeichnet, daß die Drosselklappe
(3) durch die in der Mischkammer (16) und im
Belüftungsrohr (8) auftretende Druckdifferenz
betätigt wird.

8. Vorrichtung nach Anspruch 7, dadurch
gekennzeichnet, daß die Drosselklappe (3) mit
einem im Luftstrom der durch das Belüftungsrohr
(8) zugeführten Luft gelegenen Drosselkolben (5)
verbunden ist.

9. Vorrichtung nach den Ansprüchen 7 und 8,
dadurch gekennzeichnet, daß die Drosselklappe
direkt mit dem Drosselkolben verbunden ist.

10. Vorrichtung nach den Ansprüchen 7 bis 9,
dadurch gekennzeichnet, daß die Drosselklappe
einstückig mit dem Drosselkolben ausgeführt ist.

11. Vorrichtung nach Anspruch 7, dadurch
gekennzeichnet, daß die um eine Achse (2) drehbare Drosselklappe (3) am Ausgang der Strahldüse (1) angeordnet und über einen Seilzug (4)
und eine sich am Drosselkolben (5) abstützende
Feder (12) flexibel mit dem Drosselkolben (5)
verbunden ist, daß der gegenüber dem Belüftungsrohr (8) und einer Luftblende (9) verschiebbare Drosselkolben (5) einen rundum verlaufenden Kolbenvorsprung (14) und einen Kolbenrücksprung (15) besitzt, welche die freie Querschnittsfläche zwischen der Luftblende (9) und dem Drosselkolben (5) über dessen Hub verändern und daß
der Drosselkolben (5) an einer mittels einer Spannvorrichtung (17) verstellbaren Feder (10) zentrisch
aufgehängt ist.

12. Vorrichtung nach den Ansprüchen 7 und 11,
gekennzeichnet durch eine an der Oberfläche des
Drosselkolbens (5) angeordnete Korrekturöffnung
(19), deren freier Öffnungsquerschnitt mittels
eines verstellbaren Schiebers (20) veränderbar ist.

13. Vorrichtung nach den Ansprüchen 7 und 11,
dadurch gekennzeichnet, daß der Drosselspalt zwischen der Luftblende und dem Drosselkolben
innerhalb des Belüftungsrohres angeordnet ist
und eine Druckfeder die Vorspannung des Drosselkolbens übernimmt.

14. Vorrichtung nach den Ansprüchen 7 und 11,
dadurch gekennzeichnet, daß die Druckdifferenz-
Betätigungseinrichtung zur Steuerung der Drosselklappe (3) am äußeren Ende des Belüftungsrohres (8) angeordnet ist.

15. Vorrichtung nach den Ansprüchen 7 und 11,
dadurch gekennzeichnet, daß die Druckdifferenz-
Betätigungseinrichtung zur Steuerung der Drosselklappe (3) am Übergang der Mischkammer (16)
zum Belüftungsrohr (8) angeordnet ist.

16. Vorrichtung nach einsm oder mehreren der
Ansprüche 2 bis 15, dadurch gekennzeichnet, daß
die Drosselklappe auf der der Betätigungseinrichtung zugewandten Seite angeordnet ist.

17. Vorrichtung nach einem oder mehreren der
Ansprüche 2 bis 15, dadurch gekennzeichnet, daß
die Drosselklappe auf der der Betätigungseinrichtung gegenüberliegenden Seite angeordnet ist.

18. Vorrichtung nach einem oder mehreren der
Ansprüche 2 bis 15, dadurch gekennzeichnet, daß
die Drosselklappe am Eingang der Strahldüse
angeordnet ist.

19. Vorrichtung nach einem oder mehreren der
Ansprüche 2 bis 15, dadurch gekennzeichnet, daß
die Drosselklappe in der Strahldüse angeordnet
ist.

20. Vorrichtung nach einem oder mehreren der
Ansprüche 2 bis 15, dadurch gekennzeichnet, daß
die Drosselklappe am Ausgang der Strahldüse
angeordnet ist.

21. Vorrichtung nach einem oder mehreren der
Ansprüche 2 bis 20, dadurch gekennzeichnet, daß
die Drosselklappe aus zwei zur Strahldüse zentrisch angeordneten Halbschalen besteht.

22. Vorrichtung nach einem oder mehreren der
Ansprüche 2 bis 21, gekennzeichnet durch eine zur
Strahlrichtung quer verlaufende Lagerung, um
deren Achse die Vorrichtung vertikal schwenkbar
ist.

23. Vorrichtung nach einem oder mehreren der
Ansprüche 2 bis 22, dadurch gekennzeichnet, daß
die Drosselklappe durch die im flüssigkeitsdurchströmten Rohrsystem entstehende Druckdifferenz
so gesteuert ist, daß stoßartige Mengenänderungen entstehen.

**Revendications**

1. Procédé de nettoyage d'un réservoir à liquide
servant à contenir un liquide chargé de solides,
liquide qui forme dans le réservoir une surface
libre, procédé caractérisé par un écoulement en
onde de choc introduit dans le liquide situé dans le
réservoir à liquide.

2. Dispositif d'utilisation du procédé selon la
revendication 1 caractérisé par un système de
tuyauterie (1, 16) qui s'introduit dans le réservoir à
liquide à nettoyer, qui est traversé par un liquide et
dont la section d'écoulement est modifiable en vue
de générer des modifications de l'écoulement et
des quantités.

3. Dispositif selon la revendication 2 avec une pompe centrifuge aspirant vers l'extérieur du réservoir à nettoyer, pompe dont le débit est conduit à travers un éjecteur (1); dans le jet ainsi formé et très rapide est aspiré par un tuyau d'aération (8).de l'air qui est mélangé au jet dans une chambre de mélange (16) caractérisé en ce que dans le système de tuyauterie (1, 16) placé sur le côté pression de la pompe centrifuge est placé un clapet d'étranglement (3) à commande.

4. Dispositif selon les revendications 2 et 3 caractérisé en ce que le clapet d'étranglement (3) est actionné par un entraînement à commande externe et à temps de fermeture et d'ouverture brefs.

5. Dispositif selon les revendications 2 et 4 caractérisé en ce qu'un électro-aimant de levage sert d'entraînement.

6. Dispositif selon les revendications 2 et 4 caractérisé en ce qu'est utilisé un entraînement à arbre à cames.

7. Dispositif selon les revendications 2 et 3 caractérisé en ce que le clapet d'étranglement (3) est activé par la différence de pression apparaissant dans la chambre de mélange (16) et dans le tuyau d'aération (8).

8. Dispositif selon la revendication 7 caractérisé en ce que le clapet d'étranglement (3) est relié à un piston d'étranglement (5) placé dans le courant de l'air introduit par le tuyau d'aération (8).

9. Dispositif selon les revendications 7 et 8 caractérisé en ce que le clapet d'étranglement est relié directement au piston d'étranglement.

10. Dispositif selon les revendications 7 à 9 caractérisé en ce le clapet d'étranglement forme une seule pièce avec le piston d'étranglement.

11. Dispositif selon la revendication 7 caractérisé en ce que le clapet d'étranglement (3) rotatif autour d'un axe (2) est placé à la sortie de l'éjecteur (1) et est relié de manière flexible au piston d'étranglement (5) par des câbles (4) et par un ressort (12) s'appuyant au piston d'étranglement (5), caractérisé en ce que le piston d'étranglement (5) déplaçable par rapport au tuyau d'aération (8) et à un obturateur à air (9) possède une avancée (14) sur son pourtour et une rentrée (15) qui modifient la surface libre en section entre l'obturateur à air (9) et le piston d'étranglement (5) par sa course et caractérisé en ce que le piston d'étranglement (5) est suspendu centralement à un ressort (10) réglable à l'aide d'un dispositif de tension (17).

12. Dispositif selon les revendications 7 et 11 caractérisé par une ouverture de correction (19) placée sur la surface du piston d'étranglement (5), ouverture dont la section d'ouverture libre est modifiable à l'aide d'un curseur (20) réglable.

13. Dispositif selon les revendications 7 et 11 caractérisé en ce que la fente d'étranglement entre l'obturateur à air et le piston d'étranglement est placée à l'intérieur du tuyau d'aération et en ce qu'un ressort de pression se charge del la prétension du piston d'étranglement.

14. Dispositif selon les revendications 7 et 11 caractérisé en ce que le dispositif d'actionnement de la différence de pression pour la commande du clapet d'étranglement (3) est situé à l'extrêmité extérieure du tuyau d'aération (8).

15. Dispositif selon les revendications 7 et 11 caractérisé en ce que le dispositif d'actionnement de la différence de pression pour la commande du clapet d'étranglement (3) est situé aupassage entre la chambrede mélange (16) et le tuyau d'aération (8).

16. Dispositif selon l'ne ou plusieurs des revendications 2 à 15 caractérisé en ce que le clapet d'étranglement est situé sur le côté tourné vers le dispositif d'actionnement.

17. Dispositif selon l'une ou plusieurs des revendications 2 à 15 caractérisé en ce que le clapet d'étranglement est placé sur le côté situé en face du dispositif d'actionnement.

18. Dispositif selon l'une ou plusieurs des revendications 2 à 15 caractérisé en ce que le clapet d'étranglement est placé à l'entrée de l'injecteur.

19. Dispositif selon l'une ou plusieurs des revendications 2 à 15 caractérisé en ce que le clapet d'étranglement est placé dans l'injecteur.

20. Dispositif selon l'une ou plusieurs des revendications 2 à 15 caractérisé en ce que le clapet d'étranglement est placé à la sortie de l'injecteur.

21. Dispositif selon l'une ou plusieurs des revendications 2 à 20 caractérisé en ce que le clapet d'étranglement est formé de deux demi-coques placées centralement par rapport à l'éjecteur.

22. Dispositif selon l'une ou plusieurs des revendications 2 à 21 caractérisé par un logement de paliers perpendiculaire au sens du jet, le dispositif étant pivotable verticalement autour de l'axe de ce logement de paliers.

23. Dispositif selon l'une ou plusieurs de revendications 2 à 22 caractérisé en ce que le clapet d'étranglement est commandé de telle manière par la différence de pression crééedans le système de tuyaux traversé par le liquide que des modifications de quantité sont produites par àcoups.

**Claims**

1. A method for cleaning a liquid container, which serves to receive liquid bearing solids therein, and which in the liquid container forms a free surface, characterized by a surge wave flow caused to take place in the liquid located in the liquid container.

2. An apparatus for performing the method as claimed in claim 1, characterized by a tube system (I and 16) extending into the liquid container to be cleaned and having a liquid flowing through it, the flow cross section of the system being able to be varied in order to produce surge-like changes in the flow and rate thereof.

3. An apparatus as claimed in claim 2, comprising a centrifugal pump adapted to draw liquid from the container to be cleaned, and whose pumped flow is caused to pass through a nozzle (1), air being drawn into the high speed pumping jet so formed via an aeration tube (8), which air is mixed in a mixing chamber (16) with the pumping jet, characterized in that a controlled choke flap (3) is arranged in the tube system (I and 16) on the pressure side of the centrifugal pump.

4. An apparatus as claimed in claim 2 and claim 3, characterized in that the choke flap (3) is operated by an externaliy controlled drive with short closing and opening times.

5. An apparatus as claimed in claim 2 and claim 4, characterized in that the drive is an electromagnet.

6. An apparatus as claimed in claim 2 and claim 4, characterized in that a cam shaft drive is employed.

7. An apparatus as claimed in claim 2 and claim 3, characterized in that the choke flap (3) is operated by the pressure differential occurring in the mixing chamber (16) and in the aeration tube (8).

8. An apparatus as claimed in claim 7, characterized in that the choke flap (3) is connected with a choke piston (5) arranged in the current of air supplied through the aeration tube (8).

9. An apparatus as claimed in claim 7 and claim 8, characterized in that the choke flap is directly connected with the choke piston.

10. An apparatus as claimed in the preceding claims 7 through 9, characterized in that the choke flap is made integrally with the choke piston.

11. An apparatus as claimed in claim 7, characterized in that the choke flap (3) able to be turned about an axis (1) is arranged at the outlet of the nozzle (1) and is connected via wire cable (4) and a spring (12), which bears on the choke piston (5), flexibly with the choke piston (5), in that the choke piston (5) able to slide in relation to the aeration tube (8) and an air baffle (9), has a piston projection (14) extending thereabout and piston recess (15), which modify the free cross sectional area between the air baffle (9) and the choke piston (5) along the stroke thereof and in that the choke piston (5) is centrally mounted centrally on a spring (10) which is able to be adjusted by means of a tensioning device.

12. The apparatus as claimed in claim 7 and claim 11, characterized by a correction port (19) arranged on the surface of the choke piston (5), whose free opening cross section is able to be modified by an adjustable slide (20).

13. The apparatus as claimed in claim 7 and claim 11, characterized in that the choke gap is arranged between the air baffle and the choke piston within the aeration tube and a compression spring is responsible for biasing the choke piston.

14. The apparatus as claimed in claim 7 and claim 11, characterized in that the pressure differential actuating device for the operation of the choke flap (3) is arranged on the outer end of the aeration tube (8).

15. The apparatus as claimed in claims 7 and 11, characterized in that the pressure differential actuating device for the operation of the choke flap (3) is arranged at the transition between the mixing chamber (16) and the aeration tube (8).

16. The apparatus as claimed in any one or more of preceding claims 2 through 15, characterized in that the choke flap is arranged on the side facing the actuating device.

17. The apparatus as claimed in any one or more of preceding claims 2 through 15, characterized in that the choke flap is arranged on the side facing away from the actuating device.

18. The apparatus as claimed in any one or more of preceding claims 2 through 15, characterized in that the choke flap is arranged at the inlet of the nozzle.

19. The apparatus as claimed in any one' or more of preceding claims 2 through 15, characterized in that the choke flap is arranged in the nozzle.

20. The apparatus as claimed in any one or more of preceding claims 2 through 15, characterized in that the choke flap is arranged at the outlet of the nozzle.

21. The apparatus as claimed in any one or more of preceding claims 2 through 20, characterized in that the choke flap consists of two half shells arranged centrally with respect to the nozzle.

22. The apparatus as claimed in any one or more of preceding claims 2 through 21, characterized by a bearing means extending transversely in relation to the nozzle direction and the apparatus is able to be vertically pivoted about the axis of the bearing means.

23. The apparatus as claimed in any one or more of preceding claims 2 through 22, characterized in that the choke flap is so controlled by the pressure differential produced in the tube system having the liquid flowing through it that abrupt changes in rate are caused.